# EUROPÄISCHE PATENTSCHRIFT

(11) **EP 2 739 872 B1**
(45) Veröffentlichungstag und Bekanntmachung des Hinweises auf die Patenterteilung: **12.12.2018**
(21) Anmeldenummer: 12743655.8
(22) Anmeldetag: 18.07.2012
(51) Int. Cl.: F16D 25/08

(54) **HYDRAULIKZYLINDER, INSBESONDERE FÜR EINE KUPPLUNGSBETÄTIGUNGSEINRICHTUNG IN EINEM KRAFTFAHRZEUG**
HYDRAULIC CYLINDER, IN PARTICULAR FOR A CLUTCH-OPERATING DEVICE IN A MOTOR VEHICLE
CYLINDRE HYDRAULIQUE DESTINÉ EN PARTICULIER À UN DISPOSITIF D'ACTIONNEMENT DE L'EMBRAYAGE D'UN VÉHICULE AUTOMOBILE

(30) Priorität: 03.08.2011 DE 102011109202
(43) Veröffentlichungstag der Anmeldung: 11.06.2014
(73) Patentinhaber: Schaeffler Technologies AG & Co. KG, 91074 Herzogenaurach (DE)
(72) Erfinder: OSTER, Julien, F-67480 Neuhaeusel (FR)
(86) Internationale Anmeldenummer: PCT/DE2012/000728
(87) Internationale Veröffentlichungsnummer: WO 2013/017116

(56) Entgegenhaltungen:
- EP-A2- 1 887 242
- EP-A2- 1 898 111
- DE-A1-102008 057 108
- DE-A1-102011 102 813
- FR-A1- 2 829 815

## Beschreibung

Die Erfindung betrifft einen Hydraulikzylinder, insbesondere für eine Kupplungsbetätigungseinrichtung in einem Kraftfahrzeug, umfassend ein Gehäuse, das konzentrisch um eine Welle angeordnet ist und einen ringförmigen Druckraum aufweist, in dem ein konzentrischer Kolben beweglich gelagert ist, welcher mit einem Ausrücklager verbunden ist, wobei an dem Ausrücklager ein, die Axialbewegung des Kolbens ausführender Magnet angeordnet ist, welchem ein, am Gehäuse befestigter Sensor gegenüberliegt, wobei ein Spalt zwischen Magnet und Sensor gebildet ist.

Aus der EP 1 898 111 A2 ist ein Zentralausrücker für eine hydraulische Kupplungsbetätigung bekannt, welche ein Gehäuse umfasst und eine darin angeordnete und befestigte Hülse, auf der ein zur Kupplung wirkverbindbarer Ringkolben verschiebbar geführt ist. An dem Ringkolben ist ein Ausrücklagerinnenring befestigt. Zur Erfassung der Axialposition des Ringkolbens ist ein Sensor am Gehäuse befestigt, dem ein verschiebbar geführter Magnetkörper zugeordnet ist, welcher direkt am Ausrücklager-Innenring befestigt ist. Der Magnet führt dabei die Bewegung des Ringkolbens mit aus. Nachteilig dabei ist, dass bei einer Bewegung der Kupplung, welche auf das Ausrücklager weitergeleitet wird, das Ausrücklager eine Taumelbewegung vollführt, die auf den Magneten übertragen wird. Aufgrund dieser Taumelbewegung des Magneten verändert sich ein Spalt zwischen Magnet und Sensor, was dazu führt, dass das Sensorsignal schwankt, da der Abstand zwischen Magnet und Sensor variiert. Darüber hinaus ist aufgrund der Anbindung des Magneten an das Ausrücklager ein hoher Verschleiß zu erwarten, da das System vorgespannt und überbestimmt ist.

Der Erfindung liegt die Aufgabe zugrunde, einen Hydraulikzylinder anzugeben, welcher eine hohe Genauigkeit des Sensorsignales über die gesamte Lebensdauer zulässt, wobei der Verschleiß des Magneten reduziert wird.

Erfindungsgemäß wird die Aufgabe dadurch gelöst, dass der Magnet auf einem Magnetträger befestigt ist, welcher in eine Magnetträgeraufnahme des Ausrücklagers eingreift, wobei der Magnetträger spielbehaftet in die Magnetträgeraufnahme aufgenommen wird. Dies hat den Vorteil, dass die Magnetträgeraufnahme die durch die Kupplung ausgelöste Taumelbewegung des Ausrücklagers aufnimmt und ausgleicht. Dadurch wird eine Übertragung der Taumelbewegung auf den Magnet unterbunden, wodurch sichergestellt ist, dass der Spalt zwischen Magnet und Sensor immer konstant ist. Der konstante Spalt führt dazu, dass der Sensor immer ein hochgenaues Sensorsignal ausgibt. Ein Verschleiß des Magneten unterbleibt.

Vorteilhafterweise ist der Magnetträger in der Magnetträgeraufnahme beabstandet zu dem Ausrücklager positioniert, wobei die Magnetträgeraufnahme vorzugsweise an einem Flansch des Ausrücklagers ausgebildet ist. Durch diese Beabstandung kann sich der Magnetträger innerhalb der Magnetträgeraufnahme bewegen, ohne dass dabei das Ausrücklager berührt wird. Der Magnetträger folgt dabei allein der axialen Bewegung, die durch den Kolben hervorgerufen wird. Ein Radialspiel des Ausrücklagers bleibt somit weitgehend ohne Auswirkungen auf den Spalt zwischen Magnet und Sensor.

In einer Variante ist der Magnetträger winkelförmig ausgebildet, wobei ein radiales erstes Winkelelement in die Magnetträgeraufnahme eingreift, während ein axial verlaufendes zweites Winkelelement den Magnet trägt. Aufgrund dieser Ausgestaltung wird möglichst wenig Bauraum für die Anordnung des Magnetträgers an dem Hydraulikzylinder benötigt.

In einer Weiterbildung greift das axial verlaufende zweite Winkelelement des Magnetträgers in ein axial ausgerichtetes Führungselement ein. Dadurch wird sichergestellt, dass der Magnetträger sich nur axial zum Kolben bewegen kann, wodurch der Sensor über den Magnet, welcher sich ebenfalls axial mit dem Kolben bewegt, immer eine genaue Information über die Position des Kolbens ausgibt.

In einer Ausführungsform ist das Führungselement schienenähnlich ausgebildet. Die schienenähnliche Gestaltung bewirkt eine Steifigkeit, die eine Übertragung von radialen Bewegungen des Ausrücklagers auf den Magnetträger und somit den Magnet unterbindet. Der Spalt zwischen Magnet und Sensor bleibt kontinuierlich unverändert. Diese Form der Ausgestaltung des Führungselementes lässt es zu, dass der Magnet sehr nahe an dem Sensor angeordnet werden kann, was den Vorteil hat, dass das Sensorsignal eine hohe Genauigkeit aufweist.

Um den Magnet vor Verunreinigungen zu schützen, schließt das am Gehäuse befestigte Führungselement das axiale zweite Winkelelement und den Magnet ein, wobei das Führungselement zum Sensor hin offen gestaltet ist. Dadurch bleibt die Wirkverbindung zwischen Magnet und Sensor von äußeren Bedingungen unbeeinflusst.

Vorteilhafterweise dehnen sich das axial verlaufende zweite Winkelelement und das axial an dem Gehäuse angeordnete Führungselement parallel zur Längserstreckung des Sensors aus, wobei der, eine konstante Breite aufweisende Spalt zwischen Sensor und Magnet gebildet ist. Eine solche Längserstreckung ermöglicht die Detektierung der Position des Kolbens über den gesamten Bewegungsspielraum des Kolbens.

Vorteilhafterweise beträgt die Breite des Spaltes zwischen Sensor und Magnet maximal 0,5 mm. Aufgrund dieses sehr geringen Abstandes zwischen Sensor und Magnet ist ein hochgenaues Sensorsignal einstellbar, welches konstant über die Lebensdauer des Hydraulikzylinders beibehalten wird.

Um eine radiale Bewegung des Magnetträgers in der Magnetträgeraufnahme zu ermöglichen, weist diese Verbindung vorteilhaft ebenfalls ein Spiel von maximal 0,5 mm auf. Dadurch kann sich das Ausrücklager und die Magnetträgeraufnahme relativ zueinander radial verschieben und somit wird eine Übertragung der Radialbewegung des Ausrücklagers auf den Magneten verhindert.

Die Erfindung lässt zahlreiche Ausführungsformen zu. Eine davon soll anhand der in der Zeichnung dargestellten Figuren näher erläutert werden.

Es zeigt:
- Figur 1:: Längsschnitt durch ein erstes Ausführungsbeispiel des Hydraulikzylinders
- Figur 2:: Ausschnitt aus einer Draufsicht auf den Hydraulikzylinder gemäß Figur 1.

Gleiche Merkmale sind mit gleichen Bezugszeichen gekennzeichnet.

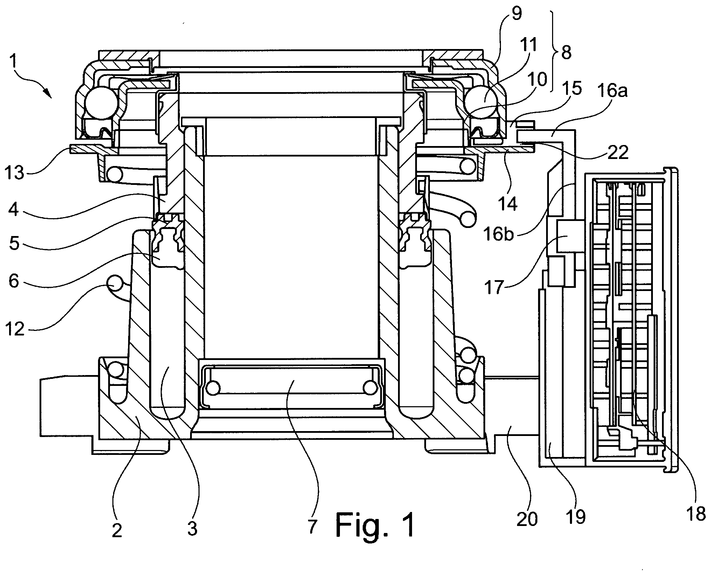

In Figur 1 ist ein Hydraulikzylinder 1 dargestellt, wie er als Nehmerzylinder in einer Kupplungsbetätigungseinrichtung eines Kraftfahrzeuges verwendet wird. Der Hydraulikzylinder 1 besteht dabei aus einem Gehäuse 2, in welchem sich ein ringförmig ausgebildeter Druckraum 3 erstreckt, in dem sich ein ebenfalls konzentrisch ausgebildeter Kolben 4 bewegt. Der Kolben 4 ist dabei in Richtung des Druckraumes 3 mit einem Dichtungsträger 5 verbunden, welcher eine Dichtung 6 trägt. Das Gehäuse 2 umgibt eine nicht weiter dargestellte Getriebewelle und ist mittels eines Radialwellendichtringes 7 gegenüber dieser Getriebewelle abgedichtet.

An den Kolben 4 schließt sich ein Ausrücklager 8 an, welches als Wälzlager ausgebildet ist und aus einem Außenring 9 und einem Innenring 10 besteht, zwischen welchen Wälzelemente 11 in Form von Kugeln angeordnet sind. Dieses Ausrücklager 8 ist mit einer nicht weiter dargestellten Kupplung verbunden. Um das Gehäuse 2 und den Kolben 4 erstreckt sich eine Vorlastfeder 12.

An dem Innenring 10 ist ein Flansch 13 des Ausrücklagers 8 befestigt, welcher eine sich einseitig radial nach außen erstreckende Magnetträgeraufnahme 14 aufweist. Diese Magnetträgeraufnahme 14 weist eine Ausnehmung 15 auf, die sich axial durch die gesamte Magnetträgeraufnahme 14 erstreckt und in welcher der Außenring 9 des Ausrücklagers 8 frei beweglich gelagert ist.

In die Magnetträgeraufnahme 14 greift ein Magnetträger 16 ein, welcher sich aus zwei Winkelelementen zusammensetzt. Ein erstes Winkelelement 16a des Magnetträgers 16 ist als kurzer Steg ausgebildet und steckt in der Magnetträgeraufnahme 14, wobei das erste Winkelelement 16a nur soweit in die Magnetträgeraufnahme 14 eingeführt ist, dass sie vor der axialen Ausnehmung 15 endet. Zwischen dem Winkelelement 16a und der Magnetträgeraufnahme 14 ist dabei ein Spiel ausgebildet, das in der Figur durch den Spalt 22 dargestellt ist. Durch dieses Spiel kann der Magnetträger 16 radial in der Magnetträgeraufnahme 14 hin- und hergleiten und so auftretende Radialbewegungen des Ausrücklagers 8 kompensieren. Vorteilhaft übersteigt dabei der Spalt 22 in axialer Richtung eine Breite von 1mm, bzw. 0,5mm nicht. Das zweite Winkelelement 16b des Magnetträgers 16 bildet mit dem ersten Winkelelement 16a einen rechten Winkel und trägt einen Magneten 17, welcher aufgrund der Bewegung des Kolbens 4 über das Ausrücklager 8 parallel zur axialen Ausrichtung des Hydraulikzylinders 1 bewegt wird.

Der Magnet 17 ist gegenüberliegend zu einem Sensor 18 angeordnet, welcher sich längs der möglichen Bewegungsstrecke des Kolbens 4 erstreckt. Das zweite Winkelelement 16b, welches den Magnet 17 trägt, wird in einem, als Schiene ausgebildeten Führungselement 19 passgenau geführt. Dieses schienenähnliche Führungselement 19 weist dabei eine hohe Steifigkeit auf.

Mittels dem Sensor 18 und dem Magnet 17 wird die Position des Kolbens 4 und somit die Position der nicht weiter dargestellten Kupplung detektiert. In der in Figur 1 dargestellten Ausführung ist die Kupplung geöffnet. Wird die Kupplung bewegt, so wird diese Bewegung auf das Ausrücklager 8 übertragen. Um zu verhindern, dass die Bewegung auch Auswirkungen auf die Position des Magnet 17 hat, was zur Folge hätte, dass sich die Breite des Spaltes 21 zwischen Magnet 17 und Sensor 18 verändert und somit eine negative Auswirkung auf das Sensorsignal hat, ist in der Magnetträgeraufnahme 14 die axiale Ausnehmung 15 ausgebildet. Mittels dieser, sich axial zum Kolben 4 erstreckenden Ausnehmung 15 kann sich das Ausrücklager 8 sowohl radial als auch axial innerhalb der Magnetträgeraufnahme 14 bewegen, ohne dass dies Auswirkungen auf den Magnetträger 16 hat, da dieser beabstandet zu dem Ausrücklager 8 angeordnet ist. Weiterhin trägt die Steifigkeit der Führungsschiene 19 dazu bei, dass außer einer axialen Bewegung des Magneten keine weiteren Freiheitsgrade der Bewegung zugelassen sind. Aufgrund dieser Ausgestaltung wird der Magnet 17 nur in axialer Richtung gemeinsam mit dem Kolben 4 bewegt, wobei bei Erreichung des unteren Endes der Führungsschiene 19 durch den Magnet 17 die geschlossene Stellung der Kupplung angezeigt wird.

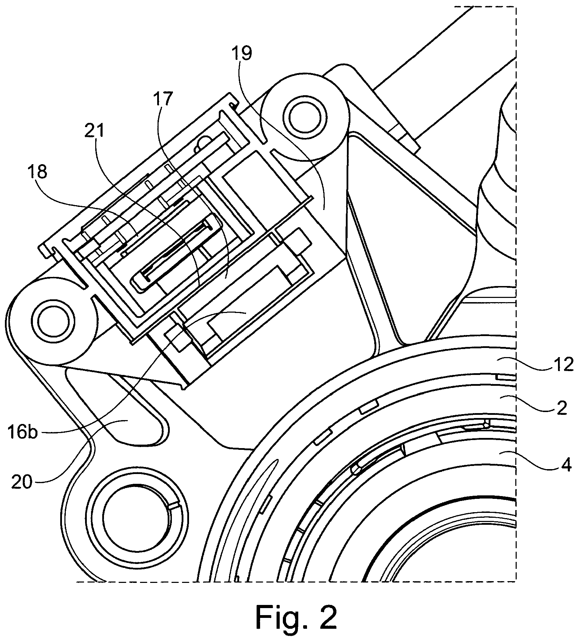

In Figur 2 ist ein Ausschnitt aus einem Querschnitt des Hydraulikzylinders 1 dargestellt. Dabei ist der schmale konstante Spalt 21 zwischen dem Sensor 18 und dem Magnet 17 ersichtlich. Das Führungselement 19 umschließt dabei das zweite Winkelelement 16b des Magnetträgers 16 annähernd U-förmig, so dass er nur offen gegenüber dem Sensor 18 gestaltet ist. Dies erlaubt eine direkte Wirkverbindung dem Magneten 17 mit dem Sensor 18 und schützt diese Verbindung vor Verunreinigungen und Umgebungseinflüssen. Die Führungsschiene 19 ist gemeinsam mit dem Sensor 18 an einem Arm 20 des Gehäuses 2 befestigt.

Die erläuterte Ausgestaltung des Hydraulikzylinders 1 erlaubt die Einstellung des Spaltes 21 zwischen dem Magneten 17 und dem Sensor 18 von maximal 0,5 mm. Aufgrund dieser sehr engen Ausrichtung von Magnet 17 und Sensor 18 zueinander, die aufgrund der starren Verbindung über das Führungselement 18 konstant über die Lebensdauer des Hydraulikzylinders bleibt, wird eine hohe Genauigkeit des Sensorsignals gewährleistet.

### Bezuaszeichenliste

- 1: Hydraulikzylinder
- 2: Gehäuse
- 3: Druckraum
- 4: Kolben
- 5: Dichtungsträger
- 6: Dichtung
- 7: Radialwellendichtring
- 8: Ausrücklager
- 9: Außenring
- 10: Innenring
- 11: Wälzelemente
- 12: Vorlastfeder
- 13: Flansch des Ausrücklagers
- 14: Magnetträgeraufnahme
- 15: Ausnehmung
- 16: Magnetträger
- 16a: erstes Winkelelement des Magnetträgers
- 16b: zweites Winkelelement des Magnetträgers
- 17: Magnet
- 18: Sensor
- 19: Führungselement
- 20: Arm des Gehäuses
- 21: Spalt
- 22: Spalt

## Patentansprüche

1. Hydraulikzylinder, insbesondere für eine Kupplungsbetätigungseinrichtung in einem Kraftfahrzeug, umfassend ein Gehäuse (2), das konzentrisch um eine Welle angeordnet ist und einen ringförmigen Druckraum (3) aufweist, in dem ein konzentrischer Kolben (4) beweglich gelagert ist, welcher mit einem Ausrücklager (8) verbunden ist, wobei an dem Ausrücklager (8) ein, die Axialbewegung des Kolbens (4) ausführender Magnet (17) angeordnet ist, welchem ein am Gehäuse (2) befestigter Sensor (18) gegenüberliegt, wobei ein Spalt (21) zwischen Magnet (17) und Sensor (18) gebildet ist, und wobei der Magnet (17) auf einem Magnetträger (16) befestigt ist, welcher in eine Magnetträgeraufnahme (14) des Ausrücklagers (8) eingreift, **dadurch gekennzeichnet, dass** zwischen Magnetträgeraufnahme (14) und dem Magnetträger (16) ein auf den ringförmigen Druckraum (3) bezogenes axiales und radiales Spiel ausgebildet ist.

2. Hydraulikzylinder nach Anspruch 1, **dadurch gekennzeichnet, dass** das axiale Spiel maximal 1,0 mm ist.

3. Hydraulikzylinder nach Anspruch 1 oder 2, **dadurch gekennzeichnet, dass** der Magnetträger (16) in der Magnetträgeraufnahme (14) beabstandet zu dem Ausrücklager (8) positioniert ist, wobei die Magnetträgeraufnahme (14) vorzugsweise an einem Flansch (13) des Ausrücklagers (8) ausgebildet ist.

4. Hydraulikzylinder nach Anspruch 3, **dadurch gekennzeichnet, dass** die Magnetträgeraufnahme (14) sich radial bezogen auf den ringförmigen Druckraum (3) vom Ausrücklager (8), vorzugsweise von dessen Flansch (13), erstreckt und eine auf den ringförmigen Druckraum (3) bezogene axiale Ausnehmung (15) zum Ausgleich eines Spiels des Ausrücklagers (8) auf der, dem Ausrücklager (8) zugewandten Seite aufweist, wobei der in die Magnetträgeraufnahme (14) eingeführte Magnetträger (16) vor der axialen Ausnehmung (15) endet.

5. Hydraulikzylinder nach mindestens einem der vorangehenden Ansprüche, **dadurch gekennzeichnet, dass** der Magnetträger (16) winkelförmig ausgebildet ist, wobei ein radiales erstes Winkelelement (16a) in die Magnetträgeraufnahme (14) eingreift, während ein axial verlaufendes zweites Winkelelement (16b) den Magnet (17) trägt.

6. Hydraulikzylinder nach Anspruch 5, **dadurch gekennzeichnet, dass** das axial verlaufende zweite Winkelelement (16b) in ein axial ausgerichtetes Führungselement (19) eingreift.

7. Hydraulikzylinder nach Anspruch 6, **dadurch gekennzeichnet, dass** das Führungselement (19) schienenähnlich ausgebildet ist.

8. Hydraulikzylinder nach Anspruch 6 oder 7, **dadurch gekennzeichnet, dass** das am Gehäuse (2) befestigte Führungselement (19) das axiale zweite Winkelelement (16b) und den Magnet (17) einschließt und zum Sensor (18) hin offen gestaltet ist.

9. Hydraulikzylinder nach mindestens einem der Ansprüche 5 bis 8, **dadurch gekennzeichnet, dass** das axial verlaufende zweite Winkelelement (16b) und das axial an dem Gehäuse (2) angeordnete Führungselement (19) sich parallel zur Längserstreckung des Sensors (18) ausdehnen, wobei der, eine konstante Breite aufweisende Spalt (21) zwischen Sensor (18) und Magnet (17) gebildet ist.

10. Hydraulikzylinder nach Anspruch 9, **dadurch gekennzeichnet, dass** die Breite des Spaltes (21) zwischen Sensor (18) und Magnet (17) maximal 0,5 mm beträgt.

## Claims

1. Hydraulic cylinder, in particular for a clutch actuating device in a motor vehicle, comprising a housing (2) which is arranged concentrically about a shaft and has an annular pressure space (3), in which a concentric piston (4) is mounted movably which is connected to a release bearing (8), a magnet (17) which carries out the axial movement of the piston (4) and lies opposite a sensor (18) which is fastened to the housing (2) being arranged on the release bearing (8), a gap (21) being formed between the magnet (17) and the sensor (18), and the magnet (17) being fastened on a magnet carrier (16) which engages into a magnet carrier receptacle (14) of the release bearing (8), **characterized in that** an axial and radial play in relation to the annular pressure space (3) is configured between the magnet carrier receptacle (14) and the magnet carrier (16).

2. Hydraulic cylinder according to Claim 1, **characterized in that** the axial play is at most 1.0 mm.

3. Hydraulic cylinder according to Claim 1 or 2, **characterized in that** the magnet carrier (16) is positioned in the magnet carrier receptacle (14) in a manner which is spaced apart from the release bearing (8), the magnet carrier receptacle (14) preferably being configured on a flange (13) of the release bearing (8).

4. Hydraulic cylinder according to Claim 3, **characterized in that** the magnet carrier receptacle (14) extends from the release bearing (8), preferably from its flange (13), radially in relation to the annular pressure space (3), and has an axial recess (15) in relation to the annular pressure space (3) for compensating for a play of the release bearing (8) on the side which faces the release bearing (8), the magnet carrier (16) which is introduced into the magnet carrier receptacle (14) ending in front of the axial recess (15).

5. Hydraulic cylinder according to at least one of the preceding claims, **characterized in that** the magnet carrier (16) is of angled configuration, a radial first angled element (16a) engaging into the magnet carrier receptacle (14), whereas an axially running second angled element (16b) carries the magnet (17).

6. Hydraulic cylinder according to Claim 5, **characterized in that** the axially running second angled element (16b) engages into an axially oriented guide element (19).

7. Hydraulic cylinder according to Claim 6, **characterized in that** the guide element (19) is of rail-like configuration.

8. Hydraulic cylinder according to Claim 6 or 7, **characterized in that** the guide element (19) which is fastened to the housing (2) closes the axial second angled element (16b) and the magnet (17) and is of open design towards the sensor (18).

9. Hydraulic cylinder according to at least one of Claims 5 to 8, **characterized in that** the axially running second angled element (16b) and the guide element (19) which is arranged axially on the housing (2) extend parallel to the longitudinal extent of the sensor (18), the gap (21) which has a constant width being formed between the sensor (18) and the magnet (17).

10. Hydraulic cylinder according to Claim 9, **characterized in that** the width of the gap (21) between the sensor (18) and the magnet (17) is at most 0.5 mm.

## Revendications

1. Vérin hydraulique, en particulier pour un dispositif d'actionnement d'embrayage d'un véhicule automobile, comprenant un boîtier (2) disposé concentriquement autour d'un arbre et présentant un espace annulaire (3) sous pression relié à une butée (8) et dans lequel un piston (4) concentrique est monté à déplacement, un aimant (17) réalisant le déplacement axial du piston (4) étant disposé sur la butée (8) et étant situé face à un capteur (18) fixé sur le boîtier (2), un interstice (21) entre l'aimant (17) et le capteur (18) étant formé et l'aimant (17) étant fixé sur un support (16) d'aimant qui s'engage dans un logement (14) de support d'aimant de la butée (8), **caractérisé en ce que**
un jeu axial et un jeu radial sont formés par rapport à l'espace annulaire sous pression (3) entre le logement (14) de support d'aimant et le support (16) d'aimant.

2. Vérin hydraulique selon la revendication 1, **caractérisé en ce que** le jeu axial est d'au plus 1,0 mm.

3. Vérin hydraulique selon les revendications 1 ou 2, **caractérisé en ce que** le support (16) d'aimant est placé dans le logement (14) de support d'aimant à distance de la butée (8), le logement (14) de support d'aimant étant de préférence formé sur une bride (13) de la butée (8).

4. Vérin hydraulique selon la revendication 3, **caractérisé en ce que** le logement (14) de support d'aimant s'étend radialement par rapport à l'espace annulaire (3) sous pression en partant de la butée (8) et de préférence de sa bride (13) et présente une découpe axiale (15) par rapport à l'espace annulaire (3) sous pression pour compenser le jeu de la butée (8) sur le côté tourné vers la butée (8), le support (16) d'aimant inséré dans le logement (14) de support d'aimant se terminant en avant de la découpe axiale (15) .

5. Vérin hydraulique selon au moins l'une des revendications précédentes, **caractérisé en ce que** le support (16) d'aimant a une forme coudée, un premier élément radial (16a) du coude s'engageant dans le logement (14) de support d'aimant tandis qu'un deuxième élément coudé (16b) s'étendant axialement porte l'aimant (17).

6. Vérin hydraulique selon la revendication 5, **caractérisé en ce que** le deuxième élément coudé (16b) s'étendant axialement s'engage dans un élément de guidage (19) orienté axialement.

7. Vérin hydraulique selon la revendication 6, **caractérisé en ce que** l'élément de guidage (19) est configuré en rail.

8. Vérin hydraulique selon les revendications 6 ou 7, **caractérisé en ce que** l'élément de guidage (19) fixé sur le boîtier (2) englobe le deuxième élément coudé (16b) s'étendant axialement et l'aimant (17) et est ouvert en direction du capteur (18).

9. Vérin hydraulique selon au moins l'une des revendications 5 à 8, **caractérisé en ce que** le deuxième élément coudé (16b) s'étendant axialement et l'élément de guidage (19) disposés axialement sur le boîtier (2) s'étendent parallèlement à l'extension longitudinale du capteur (18), l'interstice (21) présentant une largeur constante étant formé entre le capteur (18) et l'aimant (17).

10. Vérin hydraulique selon la revendication 9, **caractérisé en ce que** la largeur du boîtier (21) entre le capteur (18) et l'aimant (17) vaut au plus 0,5 mm.
